# EUROPEAN PATENT APPLICATION

(11) **EP 4 624 380 A1**
(43) Date of publication of application: **01.10.2025**
(21) Application number: 24167850.7
(22) Date of filing: 29.03.2024
(51) Int. Cl.: B65G 21/10, B65G 41/00, E01H 1/00, E04G 21/04

(54) **ARTICULATED CONVEYOR FOR EARTH MATERIAL PROCESSING EQUIPMENT**

(71) Applicant: Sandvik Ltd, Dungannon, Tyrone BT70 2HW (GB)
(72) Inventor: SMYTH, Stuart, Ballygawley, BT70 2HW (GB); BAXTER, Adam, Ballygawley, BT702HW (GB)
(74) Representative: Sandvik

(57) **Abstract**

In one aspect of the disclosure there is provided an articulated conveyor 10 for earth material processing equipment 60, such as a mobile crusher, the conveyor comprising: a bottom section 20 having a proximal end portion 21 forming at least part of one or more first revolute joint P1 for coupling the conveyor to the equipment 60; a head section 30 having a proximal end 31 forming at least one second revolute joint P2 with a bottom section distal end portion; at least one suspender 45 may be provided for suspending the conveyor 10 from the equipment 60 in an unfolded operative position where the conveyor during use projects from the equipment; wherein the conveyor is allowed to articulate during use between the operative position and a folded transport position where the conveyor is folded at the equipment 60, and wherein the head section 30 is configured to articulate from the operative position in a first folding direction F1 towards the transport position under the action of gravity G.

## Description

### TECHNICAL FIELD

The present disclosure generally relates to conveyors for earth material, and more particularly relates to an articulated conveyor for earth material processing equipment.

### BACKGROUND

In the realm of earth material processing, the equipment landscape typically encompasses various processing units, ranging from vibratory screening devices to crushers and conveyors. These units facilitate the movement and manipulation of materials within processing systems.

Traditionally, such equipment can be broadly categorized into two types: stationary units firmly entrenched at work sites and mobile units designed for relocation within or between sites, often featuring mobility enhancements like wheels or tracks.

However, a common challenge persists across both stationary and mobile variants: the substantial size of the machinery, which complicates transportation logistics. Transporting such sizable equipment demands meticulous consideration of factors like weight and spatial economy.

To address these challenges, existing solutions often incorporate mechanisms enabling a transition from an operational configuration to a more compact transport configuration. For instance, conveyors may be equipped with slewing capabilities to minimize their footprint during transit. These adaptations aim to ease the burden on operators tasked with equipment transport and enhance compliance with size restrictions.

Furthermore, safety considerations loom large during equipment transformation and transport activities, underscoring the importance of implementing robust safety protocols throughout these processes.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments may provide a solution that may enable provision of a conveyor that facilitates improved economy of space and that may be operated in a safe and reliable manner.

In one aspect of the disclosure there is provided an articulated conveyor for earth material processing equipment, such as a mobile crusher, the conveyor comprising: a bottom section having a proximal end portion forming at least part of one or more first revolute joint for coupling the conveyor to the equipment, a head section having a proximal end forming at least one second revolute joint with a bottom section distal end portion, wherein the conveyor is allowed to articulate during use between the operative position and a folded transport position where the conveyor during use is folded at the equipment, and wherein the head section is configured to articulate from the operative position in a first folding direction towards the transport position under the action of gravity.

In some embodiments at least one suspender is provided for suspending the conveyor from the equipment in the unfolded operative position wherein the conveyor during use projects from the equipment.

In some embodiments the head section is configured to articulate in the first folding direction to maintain a tension in the suspender in response to articulation of the bottom section in a second folding direction that is opposite the first folding direction.

In some embodiments the suspender is under tension until the head section reaches an equilibrium point.

In some embodiments the suspender is under tension until the head section reaches a vertical orientation.

In some embodiments the suspender is a tension-only member.

In some embodiments, in the operative position, a first moment is provided at the second revolute joint in response to gravity acting on the head section, and wherein a corresponding counteracting second moment is provided by the suspender.

In some embodiments the head section proximal end portion defines a lever in relation to the second revolute joint for facilitating the second moment, wherein the lever comprises an anchor point for cooperating with the suspender.

In some embodiments the anchor point and the second revolute joint are arranged vertically distanced in the operative position, preferably the anchor point and the second revolute joint are provided at vertically opposite sides of the head section in the operative position.

In some embodiments the conveyor further comprises a plurality of rollers for supporting a conveyor belt in the operative position, wherein the plurality of rollers comprises at least one displaceable roller displaceable between a protruding configuration in the operative position and a retracted configuration in the transport position.

In some embodiments the conveyor further comprises a mechanical transmission configured to translate the articulation of the conveyor between the operative position and the transport position into displacement of the at least one displaceable roller between the protruding configuration and the retracted configuration.

In some embodiments the mechanical transmission comprises:
a first gear provided on one of the bottom section and the head section, wherein the first gear is rotatable relative said one of the bottom section and the head section, and
a second gear provided on the other of the bottom section and the head section, wherein the second gear is stationary relative said other of the bottom section and the head section,
wherein the second gear is arranged in driving engagement with the first gear, and
wherein the first gear is operably coupled to the at least one displaceable roller for displacing the roller between the protruding configuration and the retracted configuration.

In some embodiments the first gear is provided on the bottom section, and wherein the second gear is provided on the head section, such as at the second revolute joint, for example at an axis of rotation of the second revolute joint.

In some embodiments the bottom section and the head section articulates in respective and opposite directions during the articulation towards the operative position and towards the transport position respectively.

In some embodiments the head section is allowed to articulate under the action of gravity while a respective length of the at least one suspender is constant.

In some embodiments further comprising actuation means connected to the bottom section and configured to cooperate with the equipment and operable for displacing the bottom section at least in the second folding direction.

In some embodiments the actuation means is electronically controllable from a remote location.

In some embodiments a gearing ratio between the first gear and the second gear is adapted such that the at least one displaceable roller articulates from a protruding position to a retracted position relative the bottom section in response to the conveyor assuming the transport position.

In some embodiments the bottom section distal end portion and the head section proximal end portion comprises respective locking surfaces configured to be brought into abutment in the operative position for arresting articulation of the conveyor in the first and second unfolding directions beyond the operative position.

In some embodiments the head section distal end portion articulates in a proximal direction in response to articulation of the bottom section distal end portion in a proximal direction.

In some embodiments, one or both of the bottom section and the head section comprises sub-sections.

In a further aspect of the disclosure there is provided an earth material processing equipment, such as a mobile crusher, comprising the articulated conveyor according to any one of the preceding claims.

### BIEF DESCRIPTION OF DRAWINGS

Example embodiments will be described in more detail to the following figures, in which:
FIG. 1 shows a side view of the conveyor according to an embodiment of the disclosure in the operative position.
FIG. 2 shows a perspective view of the embodiment of FIG. 1.
FIG. 3 shows a side view of the conveyor in a partly folded position according to an embodiment.
FIG. 4 shows perspective view of the conveyor of position of FIG. 3.
FIG. 5 shows a side view of the conveyor in the transport position according to an embodiment.
FIG. 6 shows a perspective view of the embodiment of FIG.5.
FIG. 7 shows details of the embodiment of FIG. 2 wherein a displaceable roller is configured in a protruding position.
FIG. 8 shows details of the embodiment of FIG.6 wherein the displaceable roller is configured in a retracted position.

### DETAILED DESCRIPTION

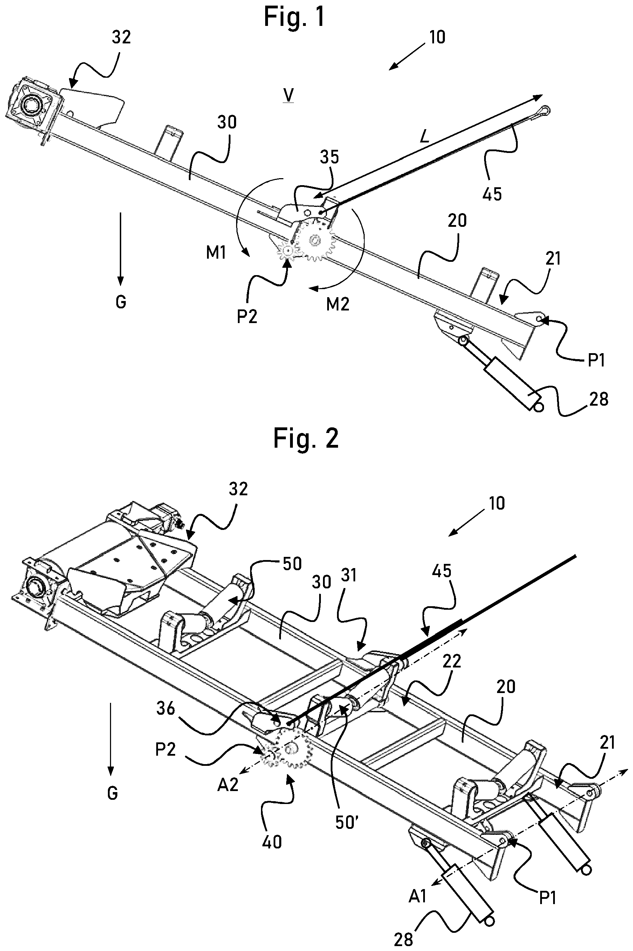

FIG. 1 and FIG. 2 show an example embodiment of the articulated conveyor 10 for earth material processing equipment 60. The equipment may be a mobile crusher. The conveyor 10 comprises a bottom section 20 having a proximal end portion 21 that forms at least one element of one or more first revolute joint P1 for pivotably coupling the conveyor to the equipment 60. By way of example, the conveyor 10 may comprise at least one bracket (not show) wherein the bottom section 20 and the bracket forms respective elements of the kinematic pair of the at least one first revolute joint P1. The bracket may then be attached to the equipment 60. The at least one first revolute joint P1 has an axis of rotation A1 transverse the vertical plane V as seen in FIG. 1. The conveyor 10 further comprises a head section 30 having a proximal end portion 31 forming at least one second revolute joint P2 with a bottom section distal end portion 22. The embodiment shown comprises two first revolute joints P1 and two second revolute joints P2 as is derivable from FIG. 2.

At least one suspender 45 may be provided for suspending the conveyor 10 from the equipment 60 in an unfolded operative position where the conveyor during use projects from the equipment 60. The suspender 45 is configured to cooperate with the equipment. The suspender 45, in particular a length L of the suspender, is adapted to cooperate with the equipment at a position vertically above the first revolute joint P1 and the second revolute joint P2 in the operative position. Suspending may comprise a hanging. The suspender 45 may be connected at one end to the head section proximal end portion 31 and at its opposite end to the equipment 60. The suspender 45 may be a tension-only member, such as a cable. In the embodiment shown, two suspenders are provided.

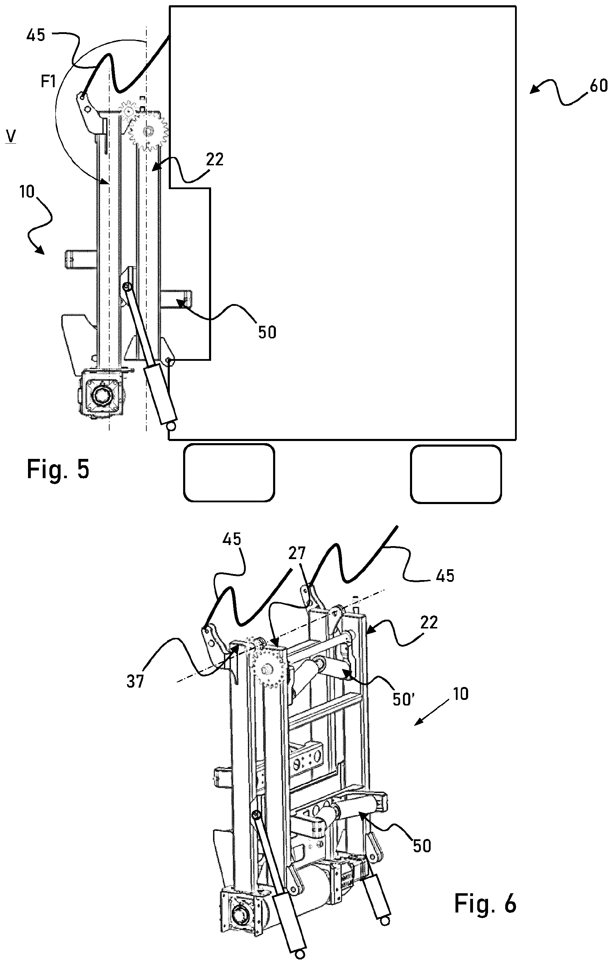

With added reference to FIG. 5 and FIG. 6, the conveyor is allowed to articulate during use between the operative position and a folded transport position where the conveyor during use with the equipment is folded at the equipment 60. The operative position is shown in FIG. 1 and FIG. 2, whereas the transport position is shown in FIG. 5 and FIG. 6.

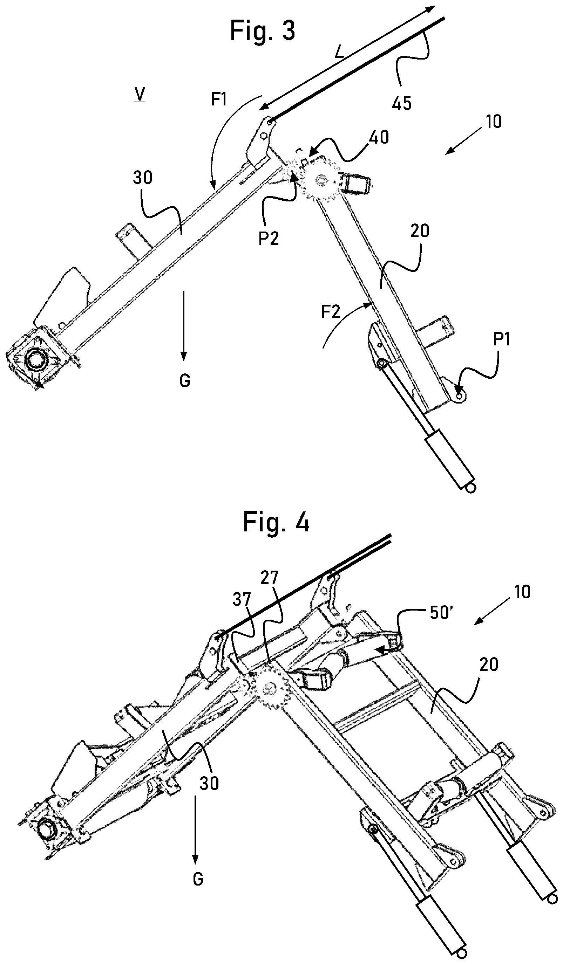

The head section 30 is configured to articulate from the operative position in a first folding direction F1 towards the transport position under the action of gravity G as shown in FIG. 3.

In the operative position, a first moment M1 is provided at the second revolute joint P2 in response to gravity G acting on the head section 30. A corresponding counteracting second moment M2 is provided by the suspender 45.

The head section proximal end portion 31 defines a reaction arm or lever 35 in relation to the second revolute joint P2 for facilitating the second moment M2, wherein the lever 35 comprises an anchor point 36 for cooperating with the suspender 45. In the embodiment shown, a respective lever 35 is provided for each suspender 45.

As derivable from FIG. 1, the anchor point 36 and the second revolute joint P2 are arranged vertically distanced in the operative position, as seen in a vertical plane V. The anchor point 36 and the second revolute joint P2 may be provided at vertically opposite sides of the head section 30 in the operative position.

As derivable from FIG. 3 and FIG. 4 the head section distal end portion 32 articulates in a proximal direction in response to articulation of the bottom section distal end portion 22 in a proximal direction. A proximal direction may comprise a direction towards the equipment 60. Correspondingly, a distal direction may comprise a direction away from the equipment 60.

The bottom section 20 and the head section 30 articulates in respective and opposite directions during the articulation towards the operative position and towards the transport position respectively. That is, the first folding direction F1 and the second folding direction F2 are opposite.

The head section 30 is allowed to articulate under the action of gravity G, such as from the operative position to an equilibrium point, while a respective length of the at least one suspender 45 is constant. An equilibrium point may imply a position where the head section is vertically arranged.

The head section 30 may be configured to articulate in the first folding direction F1 to maintain a tension in the suspender 45 in response to articulation of the bottom section 20 in a second folding direction F2 that is opposite the first folding direction F1.

The suspender 45 may be under tension until the head section 30 reaches the equilibrium point.

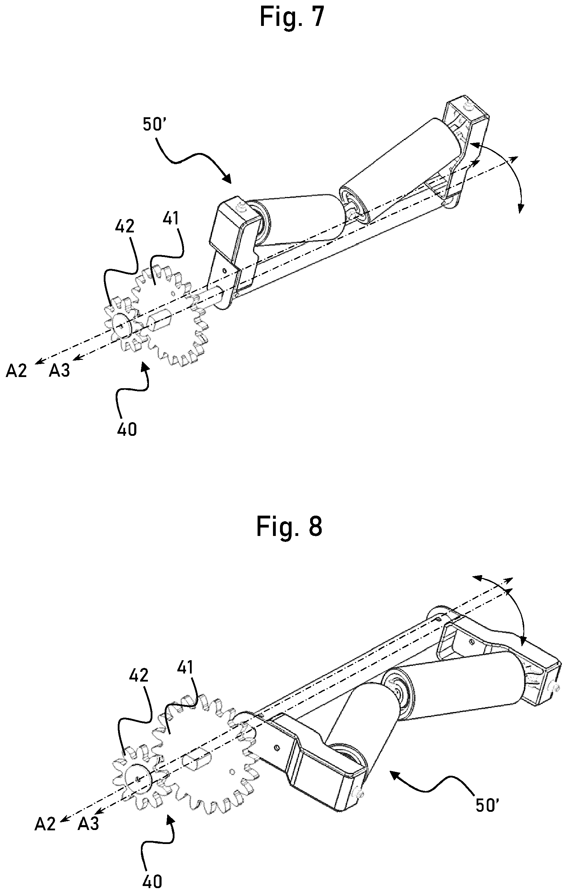

With added reference to FIG. 7 and FIG. 8, the conveyor may further comprise a plurality of rollers 50, 50' for supporting a conveyor belt in the operative position. In some embodiments the plurality of rollers 50, 50' comprises at least one displaceable roller 50' displaceable between a protruding configuration in the operative position and a retracted configuration in the transport position. In FIG. 7 a displaceable roller 50' is configured in a protruding position corresponding to the operative position of FIG.1. In FIG.8 the displaceable roller 50 'is configured in a retracted position corresponding to the transport position shown in FIG. 5. Curtesy of the displaceable roller 50', the bottom section distal end 22 may be arranged in close proximity of the earth material processing equipment 60 as derivable from FIG. 5, which is favorable for the economy of space of the equipment i.e. it is rendered more compact.

The conveyor 10 may further comprise a mechanical transmission 40 adapted to displace the at least one displaceable roller 50' between the protruding configuration and the retracted configuration in response to the articulation of the conveyor 10 between the operative position and the transport position.

The mechanical transmission 40 may comprise a first gear 41, 42 provided on one of the bottom section 20 and the head section 30. The first gear 41, 42 may be rotatable relative said one of the bottom section and the head section. A second gear 41, 42 may be provided on the other of the bottom section 20 and the head section 30. The second gear 41, 42 may be stationary relative said other of the bottom section and the head section. The second gear 41, 42 may be arranged in driving engagement with the first gear 41, 42. The first gear 41, 42 may be operably coupled to the at least one displaceable roller 50' for displacing the displaceable roller 50' between the protruding configuration and the retracted configuration.

The first gear 41 may be provided on the bottom section 20 and have an axis of rotation A3, and the second gear 42 may be provided on the head section 30, such as at the second revolute joint P2, such as at an axis of rotation A2 of the second revolute joint P2. In the embodiment shown in FIG. 7 and FIG. 8, the second gear 42 is smaller than the first gear 41. That is, the second gear 42 is provided with fewer gears than the first gear 41.

A gearing ratio between the first gear 41, 42 and the second gear 41, 42 may be adapted such that the at least one displaceable roller 50' articulates from a protruding position to a retracted position relative the bottom section 20 in response to the conveyor 10 assuming the transport position.

The conveyor 10 may further comprise actuation means 28 articulating the bottom section 20 between the operative position and the transport position. The actuation means 28 may be connected to the bottom section 20 and configured to cooperate with the equipment 60. The actuation means 28 are operable for displacing the bottom section 20 at least in the second folding direction F2. The actuation means 28 may comprises at least one hydraulic cylinder.

The actuation means 28 may be electronically controllable from a remote location, such as by remote control.

The bottom section distal end portion 22 and the head section proximal end portion 31 may comprise respective locking surfaces 27, 37 configured to be brought into abutment in the operative position for arresting articulation of the conveyor 10 in the first and second unfolding directions F1, F2 beyond the operative position.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. Articulated conveyor (10) for earth material processing equipment (60), such as a mobile crusher, the conveyor comprising:
a bottom section (20) having a bottom section proximal end portion (21) forming at least part of one or more first revolute joint (P1) for coupling the conveyor to the equipment (60),
a head section (30) having a proximal end (31) forming at least one second revolute joint (P2) with a bottom section distal end portion (22),
at least one suspender (45) for suspending the conveyor (10) from the equipment (60) in an unfolded operative position wherein the conveyor during use projects from the equipment (60);
wherein the conveyor is allowed to articulate during use between the operative position and a folded transport position where the conveyor during use is folded at the equipment (60), and
wherein the head section (30) is configured to articulate from the operative position in a first folding direction (F1) towards the transport position under the action of gravity (G).

2. The conveyor (10) according to claim 1, wherein the head section (30) is configured to articulate in the first folding direction (F1) to maintain a tension in the suspender (45) in response to articulation of the bottom section (20) in a second folding direction (F2) that is opposite the first folding direction (F1).

3. The conveyor (10) according to claim 1 or 2, wherein the suspender (45) is under tension until the head section reaches an equilibrium point.

4. The conveyor (10) according to any one of the preceding claims 1 to 3, wherein the suspender is a tension-only member.

5. The conveyor (10) according to any one of the preceding claims, wherein the operative position, a first moment (M1) is provided at the second revolute joint (P2) in response to gravity (G) acting on the head section (30), and wherein a corresponding counteracting second moment (M2) is provided by the suspender (45).

6. The conveyor (10) according to the preceding claim 5, wherein the head section proximal end portion defines a lever (35) in relation to the second revolute joint (P2) for facilitating the second moment (M2), wherein the lever comprises an anchor point (36) for connecting the suspender (45).

7. The conveyor (10) according to any one of the preceding claims 1 to 6, further comprising a plurality of rollers (50, 50') for supporting a conveyor belt in the operative position, wherein the plurality of rollers (50, 50') comprises at least one displaceable roller (50') displaceable between a protruding configuration in the operative position and a retracted configuration in the transport position.

8. The conveyor (10) according to the preceding claim 7, further comprising a mechanical transmission (40) configured to translate the articulation of the conveyor (10) between the operative position and the transport position into displacement of the at least one displaceable roller (50') between the protruding configuration and the retracted configuration.

9. The conveyor (10) according to the preceding claim 8, wherein the mechanical transmission (40) comprises:
a first gear (41, 42) provided on one of the bottom section (20) and the head section (30), wherein the first gear (41, 42) is rotatable relative said one of the bottom section and the head section, and
a second gear (41, 42) provided on the other of the bottom section (20) and the head section (30), wherein the second gear (41, 42) is stationary relative said other of the bottom section and the head section,
wherein the second gear (41, 42) is arranged in driving engagement with the first gear (41, 42), and
wherein the first gear (41, 42) is operably coupled to the at least one displaceable roller (50) for displacing the roller (50) between the protruding configuration and the retracted configuration.

10. The conveyor (10) according to the preceding claim 9, wherein the first gear (41) is provided on the bottom section (20), and wherein the second gear (42) is provided on the head section (30).

11. The conveyor (10) according to any one of the preceding claims 1 to 10, wherein the head section (30) is allowed to articulate under the action of gravity (G) while a respective length (L) of the at least one suspender (45) is constant.

12. The conveyor (10) according to any one of the preceding claims 1 to 11, further comprising actuation means (28) connected to the bottom section (20), wherein the actuation means (28) are configured to cooperate with the equipment (60) and operable for displacing the bottom section (20) at least in the second folding direction (F2) during use.

13. The conveyor (10) according to any one of the preceding claims 1 to 12, wherein the actuation means (28) is electronically controllable from a remote location.

14. The conveyor according to any one of the preceding claims 1 to 13, wherein the [a] bottom section distal end portion (22) and the head section proximal end portion (31) comprises respective locking surfaces (27, 37) configured to be brought into abutment in the operative position for arresting articulation of the conveyor (10), such as in the first and second unfolding directions (F1, F2), beyond the operative position.

15. An earth material processing equipment (60), such as a mobile crusher, comprising the articulated conveyor (10) according to any one of the preceding claims 1 to 14.
